# DEMANDE DE BREVET EUROPEEN

(11) **EP 1 362 507 A1**
(43) Date de publication de la demande: **19.11.2003**
(21) Numéro de dépôt: 03290391.6
(22) Date de dépôt: 18.02.2003
(51) Int. Cl.: A01G 5/04

(54) **Procédé de fabrication de blocs de mousse, bloc de mousse obtenu par ce procédé et dispositif de présentation de bouquets de fleurs coupées comportant un tel bloc de mousse**

(30) Priorité: 14.05.2002 FR 0205892
(71) Demandeur: Clayrton's, 59100 Roubaix (FR)
(72) Inventeur: LePoutre, Alban-Josse, 59170 Croix (FR)
(74) Mandataire: Cardy, Sophie

(57) **Abrégé**

Le procédé de fabrication de blocs de mousse selon l'invention comprend les étapes suivantes :
a) fournir un bloc de base (170) en mousse rigide, comportant une face inférieure (172), une face supérieure (174), deux faces latérales (179), une face avant (176) et une face arrière (178);
b) découper ledit bloc de base (170) selon au moins une surface de coupe d'un premier type (210, 212), afin de séparer ledit bloc de base (170) en au moins un bloc d'un premier type (150₁, 150₃) et un tronçon restant du bloc de base (170'), la surface de coupe du premier type (210, 212) formant un premier angle (α) avec la portion de la face inférieure (172) qui est adjacente au bloc du premier type ; et
c) séparer ledit tronçon restant du bloc de base (170') dudit bloc du premier type.

Application au domaine de la présentation de bouquets de fleurs.

## Description

La présente invention concerne un procédé de fabrication de blocs de mousse utilisés pour le support et la présentation d'une composition formée d'un ou plusieurs éléments de décoration, éventuellement différents, en particulier des bouquets de fleurs coupées, fraîches ou séchées, ainsi que tout type de compositions florales composées de tiges avec ou sans fleur(s).

La présente invention concerne également un bloc de mousse obtenu par ce procédé.

La présente invention concerne en outre un dispositif de présentation comprenant un tel bloc de mousse, en particulier en coopération avec un fourreau d'emballage plat formé à partir de deux films superposés ou bien en coopération avec un film d'emballage refermé par un lien, afin de constituer un emballage.

De tels blocs de mousse forment des pique-fleurs, l'extrémité d'une tige et/ou d'une baguette (ou un fil métallique) de support de la tige venant se ficher dans le bloc de mousse. Ces blocs de mousse forment aussi des support pour bouquets déjà formés, l'extrémité du bouquet venant soit se ficher dans la mousse soit se loger dans une cavité ménagée à cet effet dans le bloc de mousse.

De tels blocs de mousse sont largement utilisés et sont généralement réalisés dans un matériau hydrophile biodégradable, susceptible de retenir de l'eau, notamment une résine synthétique et en particulier une mousse de polyuréthane à cellules fermées, qui est souvent de couleur verte.

De tels blocs de mousse sont la plupart du temps, lorsqu'il sont utilisés pour des bouquets de fleurs fraîches, logés dans un récipient servant de cache et dont le fond contient une réserve d'eau permettant de maintenir la mousse humide au fur et à mesure de l'absorption de l'eau qu'elle contient par les tiges.

L'utilisation de tels récipients nécessite de disposer d'autant de modèles de blocs de mousse qu'il existe de modèles de récipient, eu égard aux formes et/ou aux dimensions différentes de ces récipients, afin de fournir toute la gamme possible de types de composition en fonction des circonstances (fête à thème, mariage, baptême, décès, ...) et de la taille de la composition, donc du budget disponible.

Ces blocs de mousse sont généralement obtenus par moulage du matériau le constituant, ce qui oblige la réalisation de moules spécifiques à chaque forme et à chaque taille de blocs de mousse.

La forme la plus simple est un parallélépipède, notamment un parallélépipède rectangle qui peut être manuellement ou automatiquement retaillé pour obtenir la forme désirée, ce qui génère une perte de matière première et augmente les coûts de fabrication.

La présente invention a pour objectif de pallier les inconvénients mentionnés précédemment en fournissant un procédé de fabrication de blocs de mousse qui permette, de façon simple et automatisable, sans perte de matière, l'obtention de blocs de mousse ; les blocs de mousse ainsi obtenus pouvant être utilisés, éventuellement seuls, comme support et étant relativement stables et discrets lors de leur utilisation comme support de présentation d'une composition, en particulier d'un bouquet de fleurs.

A cet effet est proposé, selon l'invention, un procédé de fabrication de blocs de mousse, caractérisé en ce qu'il comporte les étapes suivantes :
a) fournir un bloc de base en mousse rigide présentant une forme allongée selon une direction longitudinale perpendiculaire à un plan transversal, ledit bloc de base comportant une face inférieure pourvue d'au moins trois points définissant un plan d'appui apte à venir en contact sur une surface plane de support, une face supérieure opposée à ladite face inférieure et pourvue d'au moins trois points définissant un plan d'appui apte à venir en contact sur une surface plane, deux faces latérales, une face avant et une face arrière reliant chacune la face inférieure à la face supérieure et aux deux faces latérales, lesdites face inférieure, face supérieure et faces latérales étant orientées selon ladite direction longitudinale;
b) découper ledit bloc de base selon au moins une surface de coupe d'un premier type, présentant une direction inclinée par rapport au plan transversal et formant une intersection avec lesdites faces latérales, ladite face inférieure, et ladite face supérieure du bloc de base, afin de séparer ledit bloc de base en au moins un bloc d'un premier type comportant toute la face arrière et un tronçon restant du bloc de base comportant toute la face avant, la surface de coupe du premier type formant un premier angle (α) avec la portion du plan d'appui de la face inférieure qui est adjacente au bloc du premier type ; et
c) séparer ledit tronçon restant du bloc de base dudit bloc du premier type.
   De manière avantageuse, le procédé de fabrication selon la présente invention comporte en outre les étapes suivantes :
d) découper ledit tronçon restant du bloc de base selon au moins une surface de coupe d'un deuxième type, présentant une direction inclinée par rapport au plan transversal et formant une intersection avec lesdites faces latérales, ladite face inférieure, et ladite face supérieure du tronçon restant du bloc de base, afin de séparer ledit tronçon restant du bloc de base en au moins un bloc d'un deuxième type et un autre tronçon restant du bloc de base comportant la face avant, la surface de coupe du deuxième type formant un deuxième angle (y) avec la portion du plan d'appui de la face inférieure qui est adjacente au bloc du deuxième type, ledit deuxième angle étant tel que la somme des premier et deuxième angles est sensiblement égale à 180°; et
e) retourner à l'étape b) en remplaçant le bloc de base par ledit autre tronçon restant du bloc de base et la face arrière par la face dudit autre tronçon restant du bloc de base opposée à ladite face avant.

De cette manière, on obtient une série d'au moins deux blocs de mousse à partir d'un bloc de base allongée, simplement en venant découper ce dernier « en tranches » selon des surfaces de coupe inclinées alternativement dans un sens et dans l'autre de sorte que les blocs sont ainsi crées de manière tête-bêche, pris deux à deux de manière consécutive.

Les blocs de mousse sont ainsi formés individuellement, de manière très simple, à partir d'un bloc de base allongé, sans avoir à jeter de matière ni à redécouper le bloc après sa séparation du bloc de base.

En effet, grâce à ces surfaces de coupe d'orientation alternée, obtient des blocs présentant une face de fond, résultant soit de la face inférieure, soit de la face supérieure du bloc de base, qui présente une surface plus grande que la face de tête qui lui est opposée.

De cette manière, on comprend que cette face de fond forme la face destinée à venir en appui sur une face de support, tandis que la face de tête qui lui est opposée, ainsi qu'éventuellement les autres face du bloc de mousse, serviront de faces pour le piquage des éléments de décoration, en particuliers les extrémités des tiges de fleurs.

Ainsi, du fait que la face de fond présente une plus grande surface que la face de tête qui lui est opposée, on obtient une forme de blocs de mousse allant en s'amincissant vers le haut. Cette forme, formant plus ou moins une pyramide tronquée à base rectangulaire, rend ces blocs de mousse très stables grâce à leur base plus large et relativement discrets, lorsqu'ils sont piqués par la multitude de tiges formant le bouquet ou la composition, grâce à leur sommet moins large.

L'une ou plusieurs des dispositions suivantes est (sont) de préférence adoptée(s) :
- lesdites faces latérales du bloc de base sont planes, parallèles entre elles et perpendiculaires audit plan d'appui de la face inférieure ;
- ledit plan d'appui de la face inférieure du bloc de base est sensiblement parallèle audit plan d'appui de la face supérieure du bloc de base ;
- ladite face inférieure et ladite face supérieure du bloc de base sont sensiblement planes et parallèles entre elles ;
- lesdites surfaces de coupe du premier type et du deuxième type sont des plans formant respectivement un plan incliné du premier type et un plan incliné du deuxième type ;
- ledit plan incliné du premier type forme ledit premier angle avec la portion de la face inférieure appartenant au bloc du premier type ;
- ladite face inférieure, ladite face supérieure, lesdites faces latérales, ladite face avant et ladite face arrière du bloc de base et/ou du tronçon restant du bloc de base sont des figures à quatre côtés, avantageusement des polygones à quatre côtés ;
- lesdites face inférieure, ladite face supérieure, ladite face avant et ladite face arrière sont des rectangles ;
- l'un parmi ledit premier angle (α) et ledit deuxième angle (γ) est compris entre 30 et 75°, est de préférence égal à 30, 45, 50, 60 ou 75° et l'autre parmi ledit premier angle (α) et ledit deuxième angle (γ) est compris entre 120 et 165°, est de préférence égal à 120, 135, 140, 150 ou 165° ;
- ladite face avant et ladite face arrière du bloc de base sont symétriques par rapport audit plan transversal, en particulier, ladite face avant et ladite face arrière sont parallèles audit plan transversal, ou encore ladite face avant est inclinée par rapport au plan d'appui de la surface inférieure selon le deuxième angle (y) et ladite face arrière est inclinée par rapport au plan d'appui de la surface inférieure selon le premier angle (α) ;
- ladite face avant et ladite face arrière du bloc de base sont inclinées de 30, 45, 50, 60, 75, 120, 135, 140, 150 ou 165° par rapport au plan d'appui de la surface inférieure ;
- ledit bloc de base en mousse rigide présente une forme de parallélépipède rectangle.

En particulier, on prévoit de manière avantageuse que dans l'étape a), ledit bloc de base est réalisé par moulage.

La présente invention porte également sur un bloc de mousse tel qu'il peut être notamment obtenu par le procédé qui vient d'être énoncé.

Notamment, la présente invention porte sur un bloc de mousse synthétique, en particulier en polyuréthane à cellules fermées, qui comporte :
- une face de fond délimitée par une figure à quatre côtés comportant au moins trois points définissant un plan d'appui apte à venir en contact sur une surface plane de support, au moins deux côtés non consécutifs desdits côtés formant, en projection sur ledit plan d'appui de la face de fond, des segments rectilignes parallèles entre eux,
- deux faces latérales parallèles entre elles et perpendiculaires audit plan d'appui de la face de fond, lesdites faces latérales étant délimitées par une figure à quatre côtés, et
- une face de tête opposée à ladite face de fond et délimitée par une figure à quatre côtés parmi lesquels au moins deux côtés non consécutifs adjacents auxdites faces latérales forment, en projection sur ledit plan d'appui de la face de fond, des segments rectilignes parallèles entre eux,
- une face avant et une face arrière reliant chacune la face de fond à la face de tête et aux deux faces latérales, ladite face avant et ladite face arrière étant chacune délimitée par une figure à quatre côtés, ladite face avant et ladite face arrière formant respectivement, avec la portion dudit plan d'appui de la face de fond, qui est adjacente à ladite face de fond, un angle avant aigu (α) et un angle arrière aigu (β).

Un tel bloc de mousse présente les avantages déjà énoncés précédemment en relation avec le bloc de mousse obtenu avec le procédé de fabrication selon la présente invention, à savoir en premier lieu d'être stable grâce à une face de fond ayant une surface plus grande que la face de tête, et en second lieu d'être plus discret.

En effet, un bloc de mousse selon la présente invention donne une présentation moins lourde d'une composition, en particulier d'un bouquet de fleurs, par le fait que la face de tête présente une surface moins grande que la face de fond, c'est-à-dire qu'on évite un surplus de matière dans la partie supérieure du bloc de mousse, par rapport à ce qui est nécessaire pour le piquage de la composition.

Il faut noter que les faces latérales ne sont pas forcément exactement planes : elles peuvent être planes ou bien s'étendre autour d'un plan moyen avec un écart faible par rapport aux dimensions du bloc de mousse.

L'une ou plusieurs des dispositions suivantes est (sont) de préférence adoptée(s) :
- lesdites face avant et face arrière du bloc de mousse sont délimitées par des figures planes et chacune desdites faces avant et arrière du bloc de mousse comporte au moins deux côtés non consécutifs, adjacents auxdites faces latérales du bloc de mousse, qui sont rectilignes et parallèles entre eux ;
- ladite face de fond du bloc de mousse forme, en projection sur ledit plan d'appui, un rectangle dont les côtés de plus grande longueur s'étendent selon une direction longitudinale perpendiculaire à un plan transversal ;
- lesdites face de fond, ladite face de tête et lesdites faces latérales du bloc de mousse sont orientées selon ladite direction longitudinale ;
- lesdites faces latérales du bloc de mousse forment un polygone à quatre côtés ;
- lesdites faces latérales du bloc de mousse, la projection de ladite face de tête sur son plan d'appui correspondant et la projection de ladite face de fond sur son plan d'appui correspondant présentent une forme de trapèze ;
- ladite face de fond et ladite face de tête du bloc de mousse sont planes ;
- lesdits angle avant aigu (α) et angle arrière aigu (β) sont compris entre 30 et 75°, de préférence ils appartiennent au groupe comprenant les valeurs de 30, 45, 50, 60 et 75° ;
- la valeur dudit angle avant aigu (α) formé entre ladite face avant et ledit plan d'appui de la face de fond est égale à la valeur dudit angle arrière aigu (β) formé entre ladite face arrière et ledit plan d'appui de la face de fond ;
- ledit plan transversal forme un plan de symétrie ;
- selon la direction longitudinale, la longueur de la face de fond est comprise entre 2 et 8 fois la longueur de la face de tête ;
- la longueur de la face de fond selon la direction longitudinale est comprise entre 1 et 4 fois la hauteur du bloc de mousse mesurée selon une direction perpendiculaire au plan d'appui de la face de fond.

La présente invention porte également sur un dispositif de présentation d'une composition formée d'un ou plusieurs éléments de décoration, en particulier des bouquets de fleurs coupées, qui se caractérise en ce qu'il comporte un bloc de mousse du type qui est mentionné précédemment et un fourreau d'emballage comprenant une première feuille et une deuxième feuille, réalisées à partir de deux films superposés et découpés, et dont les bords sont soudés de manière étanche au moins à l'exception de l'emplacement d'une ouverture permettant l'entrée de ladite composition, ledit bloc de mousse étant logé dans ledit fourreau.

La présente invention porte également sur un autre dispositif de présentation d'une composition formée d'un ou plusieurs éléments de décoration, en particulier des bouquets de fleurs coupées, qui se caractérise en ce qu'il comporte un bloc de mousse du type qui est mentionné précédemment et un film d'emballage étanche refermé (replié) autour dudit bloc de mousse par un lien de façon à former un fourreau d'emballage avec une ouverture pour ladite composition ou ledit bouquet.

De préférence, ledit dispositif de présentation comprend en outre des moyens de suspension monté sur la face externe dudit fourreau d'emballage.

En particulier, lesdits moyens de suspension sont disposés sur l'une ou l'autre parmi la première et la deuxième feuille dudit fourreau d'emballage ou bien sur le film d'emballage étanche replié, soit dans une zone distante de ladite ouverture, soit dans une zone adjacente à ladite ouverture. De manière préférentielle, lesdits moyens de suspension sont disposés sur la face extérieure de l'une ou l'autre parmi la première et la deuxième feuille dudit fourreau d'emballage ou bien sur la face extérieure du film d'emballage étanche replié.

En particulier, on prévoit avantageusement que lesdits moyens de suspension comportent une partie de fixation autocollante amovible, destinée au montage desdits moyens de suspension sur ledit fourreau d'emballage, et une partie formant crochet destinée à la suspension dudit fourreau d'emballage.

Dans ce cas, il est avantageusement prévu, selon une variante préférentielle, que ladite partie de fixation présente une première face recouverte d'adhésif et une deuxième face recouverte d'un ou de plusieurs signes distinctifs obtenus par marquage et/ou impression, en particulier un code-barres. De cette manière, on comprend qu'il est possible de faire porter par le fourreau, de manière temporaire puisque les moyens de suspension sont avantageusement amovibles, une mention correspondant à une attention liée à l'occasion du cadeau que constitue la composition ou encore une information économique telle que le prix ou bien un code-barres permettant l'identification de la composition et de ses caractéristiques parmi lesquelles son prix.

Plusieurs exemples de réalisation vont maintenant être décrits et illustrés ci-après. Il est entendu que la description et les dessins ne sont donnés qu'à titre indicatif et non limitatif.

Il sera fait référence aux dessins annexés, dans lesquels :
- la figure 1 est une vue en perspective d'un bloc de mousse objet de la présente invention selon une première forme de réalisation, vu depuis l'extérieur ;
- la figure 1A est identique à celle de la figure 1 avec une représentation en traits pointillés de toutes les arêtes cachées ;
- les figures 1B et 1C représentent respectivement la vue de côté et la vue de dessus du bloc de mousse des figures 1 et 1A ;
- les figures 2, 2A, 2B et 2C sont respectivement similaires aux figures 1, 1A, 1B et 1C pour un bloc de mousse selon une deuxième forme de réalisation de la présente invention ;
- les figures 3, 3A, 3B et 3C sont respectivement similaires aux figures 1, 1A, 1B et 1C pour un bloc de mousse selon une troisième forme de réalisation de la présente invention ;
- les figures 4, 4A, 4B et 4C sont respectivement similaires aux figures 1, 1A, 1B et 1C pour un bloc de mousse selon une quatrième forme de réalisation de la présente invention ;
- les figures 5, SA, 5B et 5C sont respectivement similaires aux figures 1, 1A, 1B et 1C pour un bloc de mousse selon une cinquième forme de réalisation de la présente invention ;
- la figure 6 est une illustration du procédé de fabrication de blocs de mousse selon la présente invention ;
- les figures 7 et 8 représentent une variante du bloc de mousse selon la présente invention, respectivement, avant et après montage d'un bouquet de fleurs ;
- les figures 9 et 9A représentent, respectivement en coupe et en perspective, une première forme de réalisation d'un dispositif de présentation de bouquets de fleurs coupées selon la présente invention ;
- les figures 10 et 10A représentent, respectivement en coupe et en perspective, une deuxième forme de réalisation d'un dispositif de présentation de bouquets de fleurs coupées selon la présente invention;
- les figures 11 et 12 représentent, respectivement avant et après montage, une troisième forme de réalisation d'un dispositif de présentation de bouquets de fleurs selon la présente invention ;
- les figures 13 à 16 montrent des variantes des première et deuxième formes de réalisation des dispositifs de présentation illustrées respectivement aux figures 9 et 9A et aux figures 10 et 10A ;
- les figures 17, 18 et 18A montrent des variantes de la troisième forme de réalisation des dispositifs de présentation illustrée aux figures 11 et 12 ;
- la figure 19 montre deux fourreaux formant une quatrième forme de réalisation des dispositifs de présentation, après découpe, le fourreau de gauche étant montré depuis l'une de ses deux faces, le fourreau de droite étant montré depuis l'autre de ses deux faces ; et
- la figure 20 montre un fourreau constituant une variante des fourreaux de la figure 19 appartenant à la quatrième forme de réalisation des dispositifs de présentation.

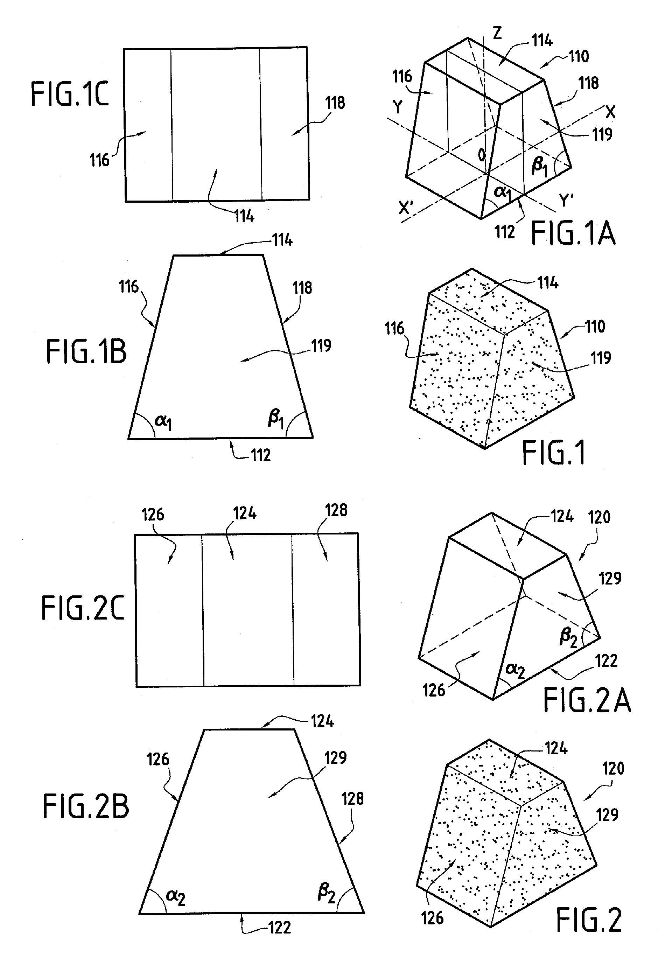

Sur les figures 1 et 1A est visible un bloc de mousse 110, vu en perspective, selon une première forme de réalisation.

Ce bloc de mousse 110 présente essentiellement une forme de tronc de pyramide à base rectangle avec deux faces latérales parallèles entre elles et perpendiculaires à la base.

Plus exactement le bloc de mousse 110 comporte une face de fond 112 (la base rectangle du tronc de pyramide), une face de tête 114 opposée à ladite face de fond 112, une face avant 116, une face arrière 118 et deux faces latérales 119.

Dans le mode de réalisation illustré, la face de fond 112, la face de tête 114, la face avant 116 et la face arrière 118 présentent la forme d'un rectangle tandis que les faces latérales 119 présentent la forme d'un trapèze.

En particulier, le rectangle formant la face de fond 112 présente deux grands côtés adjacents aux faces latérales 119 qui sont dirigées selon une direction longitudinale (X, X'). On voit donc que cette direction longitudinale (X,X') s'étend depuis la face arrière 118 en direction de la face avant 116.

La face de tête 114 présente également la forme d'un rectangle, elle est parallèle à la face de fond 112 et orientée selon une direction orthogonale à la direction longitudinale (X, X') de sorte que ce sont les petits côtés du rectangle de la face de tête 114 qui sont adjacents aux faces latérales 119.

Les faces latérales 119 étant parallèles entre elles, la longueur des petits côtés du rectangle composant la face de fond 112 est égale à la longueur des grands côtés composant le rectangle de la face de tête 114. En outre, du fait de ce qui précède, la face avant 116 et la face arrière 118 présentent également la forme d'un rectangle.

La face avant 116 forme, avec la face de fond 112, un angle avant aigu α₁ tandis que la face arrière 118 forme avec la face de fond 112 un angle arrière aigu β₁.

De préférence, on prévoit d'une manière générale, dans un souci de symétrie, que ledit angle avant α et ledit angle arrière β sont égaux de sorte que, d'une part le bloc de mousse 110 est symétrique par rapport à un plan transversale (YOZ) qui est perpendiculaire à la direction longitudinale (X, X'); et d'autre part, la face avant 116 et la face arrière 118 présentent des dimensions égales.

En outre, dans le cas préférentiel illustré, les faces latérales 119 présentent un contour en forme de trapèze isocèle.

En particulier, dans le cas de la première forme de réalisation illustrée sur les figures 1, 1A, 1B et 1C, l'angle avant α₁ et l'angle arrière β₁ sont égaux à 75 degrés tandis que la longueur de la face de fond 112 selon la direction longitudinale (X, X') est sensiblement égale à la hauteur du bloc de mousse 110 selon la direction de la droite (OZ).

En outre, dans ce cas la face de tête 114 présente une longueur selon la direction (X, X') (largeur du rectangle formant la face de tête 114) correspondant environ à la moitié de la longueur de la face de fond 112.

La forme ainsi obtenue pour le bloc de mousse 110 présente une grande stabilité de part les dimensions importantes de la face de fond 112 tout en minimisant le volume de matière ainsi que l'encombrement de la partie haute du bloc de mousse à proximité de la face de tête 114.

En effet, c'est au niveau de cette face de tête 114, ainsi qu'éventuellement dans la partie supérieure de la face avant 116, de la face arrière 118 et des faces latérales 119, que sera plantée l'extrémité libre des tiges des fleurs coupées ou de tous les autres éléments utilisés pour réaliser la composition devant être supportée par le bloc de mousse 110.

Dans la suite de la description, les deuxième, troisième, quatrième et cinquième forme de réalisation du bloc de mousse qui seront décrits en relation avec les figures correspondantes présenteront des signes de référence respectivement augmentés d'une valeur 10, 20, 30, 40 par rapport aux signes de référence utilisés en relation avec la première forme de réalisation du bloc de mousse 110 qui vient d'être décrit précédemment.

Le bloc de mousse 120 illustré sur les figures 2, 2A, 2B, 2C en relation avec une deuxième forme de réalisation se distingue de la première forme de réalisation sur les points qui suivent.

Les angles avant α₂ et arrière β₂ sont égaux entre eux et à une valeur de 70 degrés.

La longueur de la face de fond 122 est approximativement égale à 2,5 fois la largeur de la face de tête 124, cette mesure étant prise selon la direction longitudinale (X, X').

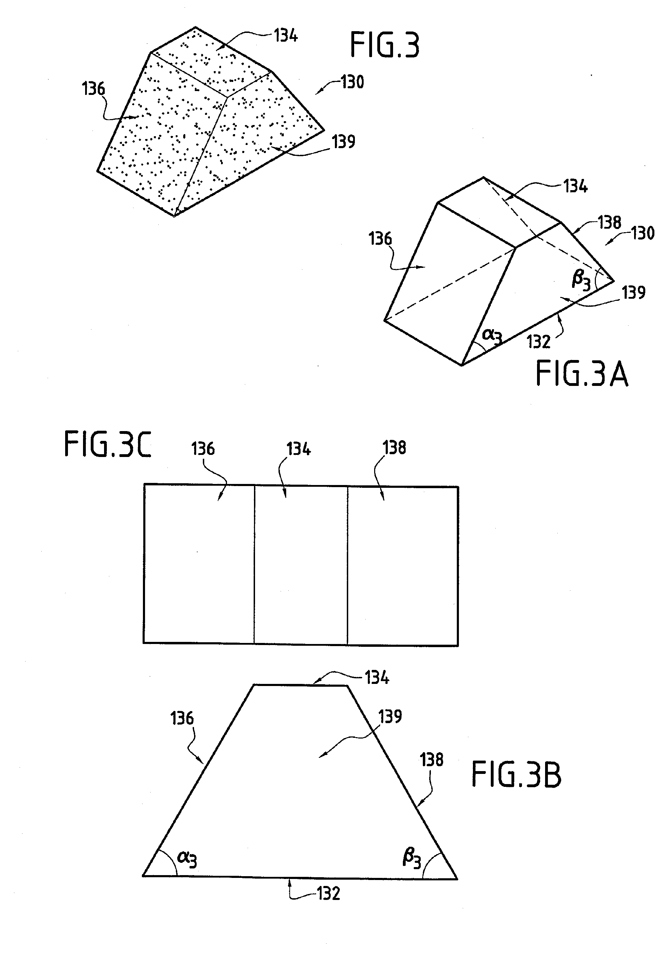

Dans le cas de la troisième forme de réalisation illustrée sur les figures 3, 3A, 3B et 3C, le bloc de mousse 130 se distingue du bloc de mousse 110 de la première forme de réalisation sur les points qui suivent.

L'angle avant α₃, formé entre la face avant 136 et la face de fond 132, est égal à l'angle arrière β₃ formé entre la face arrière 138 et la face de fond 132, les angles α₃ et β₃ étant égaux entre eux et à 60 degrés.

La longueur de la face de fond 132 est environ égale à 3,33 fois la longueur de la face de tête 134, ces longueurs étant mesurées selon la direction longitudinale (X, X').

En outre, la longueur de la face de fond 132 est environ égale à 1,6 fois la hauteur du bloc de mousse 130.

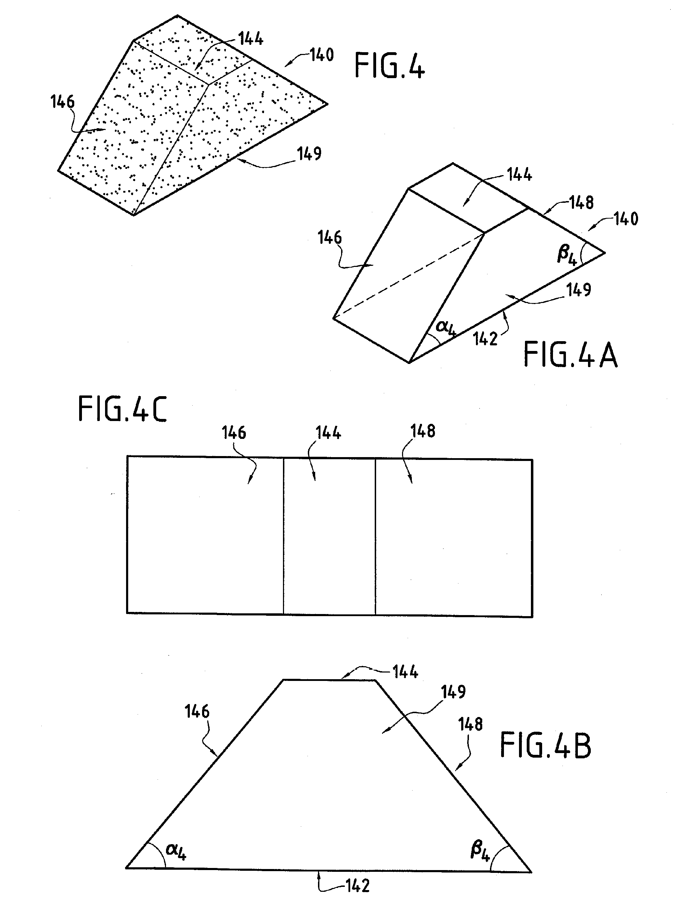

La quatrième forme de réalisation du bloc de mousse 140 illustrée sur les figures 4, 4A, 4B et 4C se distingue de la première forme de réalisation sur les points qui suivent.

L'angle avant α₄ formé entre la face avant 146 et la face de fond 142, ainsi que l'angle arrière β₄ formé entre la face arrière 148 et la face de fond 142, présente une valeur égale à 50 degrés.

La longueur de la face de fond 142 est environ égale à 4,4 fois la longueur de la face de tête 144, ces longueurs étant mesurées selon la direction (X, X').

La longueur de la face de fond 142 est environ égale à 2,1 fois la hauteur du bloc de mousse 140.

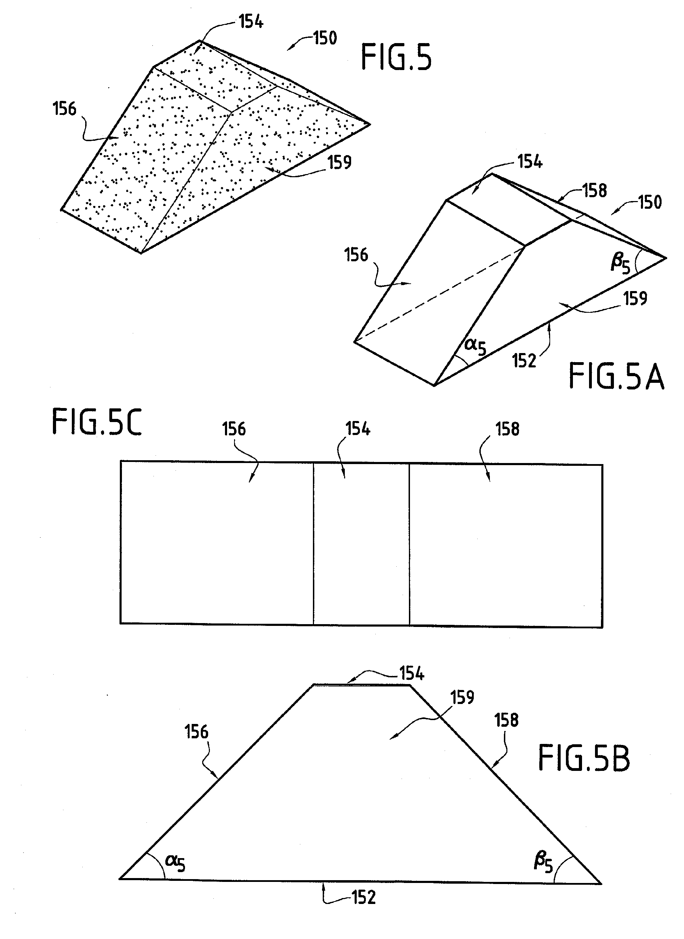

Le bloc de mousse 150 illustré sur les figures 5, 5A, 5B et 5C en relation avec la cinquième forme de réalisation d'un bloc de mousse selon l'invention se distingue du bloc de mousse 110 de la première forme de réalisation sur les points qui suivent.

La valeur de l'angle avant α₅ formé entre la face avant 156 et la face de fond 152 est égale à la valeur de l'angle arrière β₅ formé entre la face arrière 158 et la face de fond 152, cette valeur étant égale à 45 degrés.

On note en outre que la longueur de la face de fond 152 est égale à :
- environ 5 fois la longueur de la face de tête 154,
- 2,5 fois la hauteur du bloc de mousse 150.

L'invention porte également sur une sixième forme de réalisation d'un bloc de mousse, non illustrée, dans laquelle les angles avant α₆ et arrière β₆ sont égaux entre eux et à 30 degrés.

Dans le cas de cette sixième forme de réalisation, la longueur de la face de fond est sensiblement égale à 8 fois la longueur de la face de tête et à 4 fois la hauteur du bloc de mousse.

Parmi les différents points communs entre les premier à sixième formes de réalisation du bloc de mousse, on peut relever :
- une hauteur selon l'axe (OZ) identique et environ égale à deux fois la longueur de la face de tête 114, 124, 134, 144, 154 selon la direction longitudinale (X, X'),
- une face de tête 114, 124, 134, 144, 154 similaire, c'est à dire rectangulaire et présentant son plus grand côté qui s'étend de manière orthogonale par rapport à la direction longitudinale (X, X') et qui présente une longueur proche de la hauteur du bloc de mousse,
- une face de fond 112, 122, 132, 142, 152 également rectangulaire et présentant une largeur égale à la largeur du bloc de mousse (largeurs mesurées selon l'axe (OY)) et à la longueur du grand côté du rectangle formant la face de tête 114, 124, 134, 144, 154.

Ainsi, on voit que, depuis la première forme de réalisation de la figure 1, lorsque l'on examine successivement les deuxième, troisième, quatrième, cinquième et sixième formes de réalisation du bloc de mousse, on s'aperçoit que celui-ci présente une face de fond de plus en plus longue suivant la direction longitudinale (X, X') avec des faces latérales 119, 129, 139, 149 et 159 dont les segments des côtés inclinés forment un angle aigu de plus en plus petit par rapport à la face de fond 112, 122, 132, 142, 152, ce qui donne un aspect de moins en moins élancé vers le haut, c'est à dire de plus en plus aplati au fur et à mesure que la valeur de l'angle avant α et de l'angle arrière β diminue.

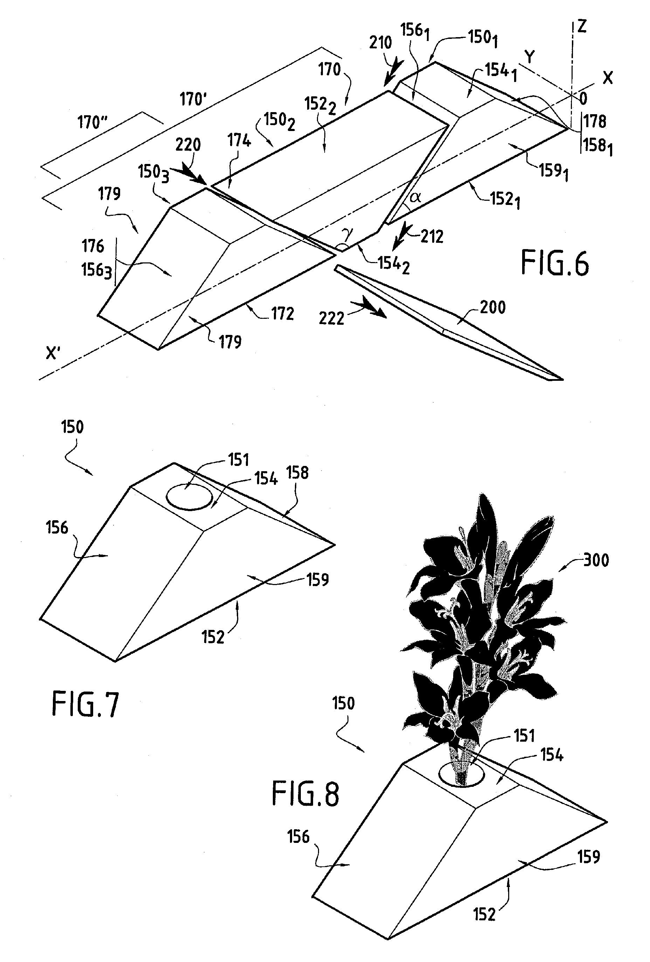

On comprendra mieux toutes les formes que peut revêtir le bloc de mousse selon la présente invention en regard de la figure 6 illustrant schématiquement le procédé de fabrication selon la présente invention permettant l'obtention de tels blocs de mousse.

Sur la figure 6 est représenté le procédé de fabrication de blocs de mousse 150₁, 150₂, 150₃ conformes à la cinquième forme de réalisation décrite précédemment à partir d'un bloc de base 170 présentant une forme allongée selon la direction longitudinale (X, X') qui est perpendiculaire au plan transversal (YOZ).

La section transversale du bloc de base 170 présente une forme de rectangle dont les petits côtés correspondent à la face inférieure 172 et à la face supérieure 174 du bloc de base 170 (largeur du bloc de base), tandis que les grands côtés du rectangle correspondent aux deux faces latérales 179 du bloc de base (hauteur du bloc de base). Toutefois, on privilégie un volume compact donc la largeur du bloc de base présente, de préférence, un écart faible avec la largeur du bloc de base.

Le bloc de base 170 présente également une face avant 176 et une face arrière 178 formées d'un rectangle formant chacun un angle égale à 45 degrés par rapport à la face inférieure 172.

Les blocs de mousse individualisés 150₁, 150₂, 150₃ sont représentés sur la figure 6 dans une position correspondant à leur origine dans le bloc de base 170 qui correspond donc à la mise bout à bout des blocs de mousse 150₁, 150₂ et 150₃ encore solidarisés entre eux et placés « tête-bêche ».

Une lame de coupe 200 est utilisée pour "couper en tranches" le bloc de base 170 afin de former chacun des blocs de mousse 150₁, 150₂ et 150₃, d'un seul passage de lame.

A cet effet, dans un premier temps, on découpe le bloc de base 170 grâce à la lame de coupe 200 selon la direction indiquée par les flèches 210 et 212 qui illustrent une surface de coupe d'un premier type formée d'un plan incliné d'un premier angle α par rapport à la face inférieure 172.

Cette surface de coupe d'un premier type traverse les faces latérales 179 ainsi que la face inférieure et la face supérieure 172, 174 du bloc de base 170 afin d'en détacher un bloc de mousse 150₁ d'un premier type comportant toute la face arrière 178 du bloc de base 170, qui constitue également la face arrière 158₁ du bloc de mousse 150₁.

La surface de coupe d'un premier type selon les flèches 210, 212 a crée la face avant 156₁ du bloc de mousse 150₁ dont la face de fond 152₁, la face de tête 154₁ et les faces latérales 159₁ sont respectivement issues d'une portion de la face inférieure 172, de la face supérieure 174 et des deux faces latérales 179 du bloc de base 170.

Dans un deuxième temps, après séparation du bloc du premier type 150₁, il reste un tronçon restant du bloc de base 170' qui est à nouveau découpé par la lame 200 selon une surface de coupe d'un deuxième type orientée selon les flèches 220, 222 et formée d'un plan incliné formant un deuxième angle y avec la portion de la face inférieure 172 du tronçon restant du bloc de base 170', à l'emplacement de ce qui va former un bloc de mousse du deuxième type 150₂.

Le deuxième angle y est complémentaire du premier angle α de sorte que leur somme est égale à 180 degrés afin d'obtenir successivement, au fur et à mesure de la coupe alternativement selon une surface de coupe d'un premier type et selon une surface de coupe d'un deuxième type, un bloc d'un premier type 150₁ et un bloc d'un deuxième type 150₂.

Ces deux blocs de mousse 150₁ et 150₂ sont initialement tête bêche l'un par rapport à l'autre et ils présentent la même inclinaison entre leur face avant et leur face arrière par rapport à leur face de fond.

En effet, au niveau du bloc de mousse du deuxième type 150₂, sa face de fond 152₂ est issue de la face supérieure 174 du bloc de base 170 tandis que le face de tête 154₂ du bloc 150₂ provient de la face inférieure 172 du bloc de base 170.

Après découpe et séparation entre le bloc de base du premier type 150₁ et le bloc de base du deuxième type 150₂, il reste un autre tronçon restant 170" du bloc de base 170 qui, dans le cas de figure représenté à la figure 6 forme un autre bloc de mousse du premier type 150₃. Si ce tronçon restant 170" du bloc de base avait été plus long, le procédé de fabrication aurait pu être poursuivi en réalisant une découpe avec la lame 200 à nouveau selon une surface de coupe d'un premier type orientée parallèlement aux flèches 210 et 212.

D'après la description qui précède du procédé de fabrication des blocs de mousse ainsi que la description des formes des blocs de mousse, on comprend que, sans sortir du cas de la présente invention, il est possible de prévoir certaines différences :
- la lame de coupe 200 n'est pas forcément plane et elle peut définir une surface de coupe qui n'est pas un plan mais une surface par exemple courbe ou ondulée,
- le bloc de base 170 étant généralement moulé, ses faces 172, 174, 176, 178 et 179 ne sont pas forcément strictement planes mais elles peuvent présenter des ondulations, des saillies et des creux ainsi que tout autre relief,
- les faces inférieure et supérieure 172, 174 du bloc de base 170 ne sont pas forcément parallèles entre elles,
- selon la forme et la distance entre les surfaces de coupe d'un premier type et d'un deuxième type, les blocs de mousse 150₁, 150₂ et 150₃, qui sont créés successivement tête bêche à partir du bloc de base 170, n'ont pas exactement forcément les mêmes dimensions,
- les faces latérales 179 du bloc de base 170 ne sont pas forcément parallèles entre elles même si cette solution est préférentielle conjointement avec le fait que l'une au moins des faces latérales 179 est perpendiculaire à la face inférieure 172 et, avantageusement, à la face supérieure 174,
- le bloc de base 170 peut présenter des faces avant 176 et arrière 178 présentant n'importe quelle orientation par rapport à la face inférieure 172.

Après leur obtention par découpes, les blocs de mousse 150₁, 150₂ et 150₃ peuvent ensuite être utilisés individuellement en vue de la réalisation d'une composition par piquage une à une de chacune des tiges composant le bouquet, au niveau de la face de tête 154 ainsi que dans la partie supérieure des faces latérales 159 et de la face avant 156 et de la face arrière 158.

Selon une variante de réalisation illustrée sur les figures 7 et 8, le bloc de mousse 150 peut en outre être pourvu d'une cavité 151 percée à l'emplacement de la face de tête 154 afin de pouvoir y loger l'extrémité des tiges du bouquet 300 comme il est montré sur la figure 8.

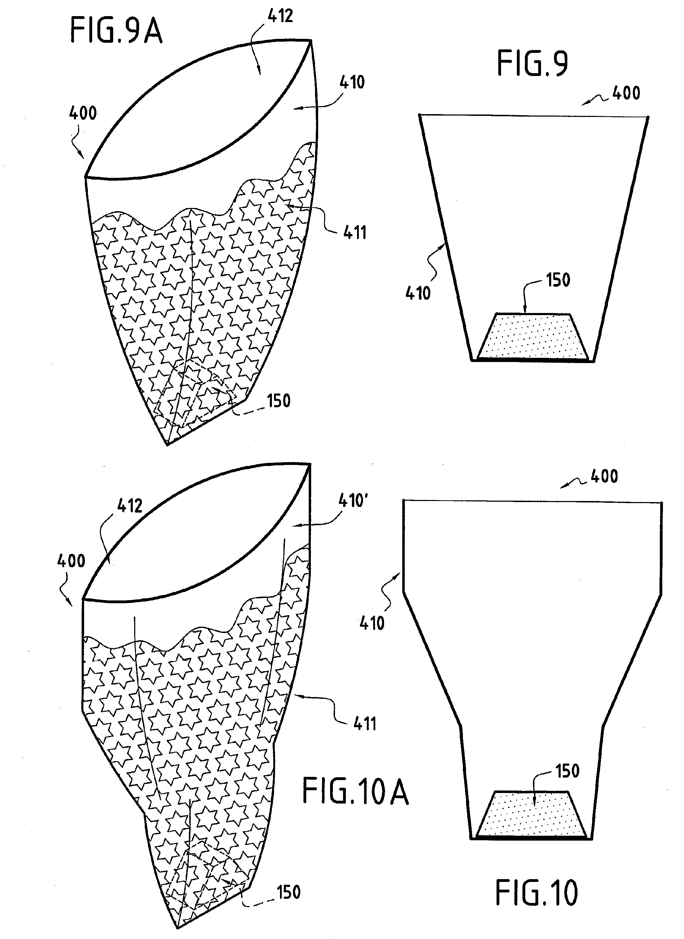

On se reportera maintenant aux figures 9, 9A illustrant une première forme de réalisation d'un dispositif de présentation de bouquet de fleurs coupées qui inclut un bloc de mousse selon l'une quelconque des formes de réalisation qui viennent d'être décrites précédemment.

Plus précisément le dispositif de présentation selon la première forme de réalisation 400 présente un bloc de mousse, par exemple constitué d'un bloc de mousse 150 selon la cinquième forme de réalisation, qui est logé au fond d'un fourreau d'emballage 410 réalisé à partir de deux films superposés dont les bords sont soudés de manière étanche à l'exception de l'emplacement d'une ouverture 412.

De cette manière, après mouillage et/ou humidification du bloc de mousse 150 et réalisation du bouquet de fleurs sur le bloc de mousse, ce dernier peut être logé dans le fond du fourreau 410 qui réalise ainsi un emballage étanche.

Dans ce cas, outre le support du bouquet, le bloc de mousse sert de réservoir d'eau.

En outre, on peut prévoir que la partie basse du fourreau 410 présente des impressions 411 qui rend opaque la partie basse de l'emballage extérieur formé du fourreau 410, de sorte que la partie basse du bouquet et le bloc de mousse 150 ne sont pas visibles à travers le fourreau 410.

Sur les figures 9 et 9A, les bords des deux films superposés qui sont soudés afin de former le fourreau d'emballage présentent une forme générale de U légèrement évasée vers le haut.

La deuxième forme de réalisation du dispositif de présentation 400 illustrée sur les figures 10 et 10A se différencie de la première forme de réalisation en ce que le fourreau 410' présente une forme générale de "Y" ou plus exactement de U dont les branches présentent différentes orientations afin de donner une forme de plus en plus évasée vers le bas et vers le fond du fourreau 410' qui contient le bloc de mousse 150.

Un lien (non représenté) peut ensuite être utilisé pour refermer le fourreau 410, 410' du dispositif de présentation 400 dans sa partie basse et accentuer sa forme évasée dans la partie haute.

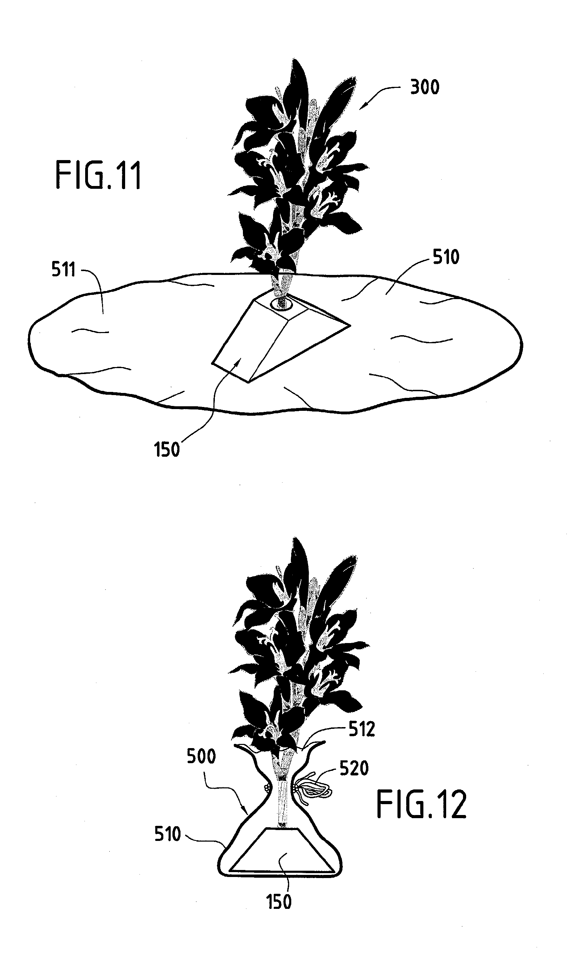

Sur les figures 11 et 12 est représentée une troisième forme de réalisation du dispositif de présentation selon la présente invention : ce dispositif de présentation 500 de bouquets de fleurs coupées comporte un bloc de mousse 150, dans lequel est fiché un bouquet de fleurs coupées 300, un film d'emballage 510 et un lien 520.

Plus précisément, le film d'emballage, qui peut être réalisé dans le même matériau, en particulier en matière plastique, que les fourreaux 410 et 410', est étanche, souple et présente une forme quelconque avec un contour fermé : un rond, un carré, un rectangle....

Le bloc de mousse 150 muni du bouquet 300 est posé sur le film 510, environ en son centre (figure 11), puis le film est replié (manuellement) autour du bloc de mousse 150 avant d'être refermé, ou plus précisément maintenu en position d'enveloppement, autour dudit bloc de mousse 150 par un lien 520 de façon à laisser une ouverture 512 au-dessus du bloc de mousse 150 afin de permettre le passage de la partie supérieure dudit bouquet 300

On comprend que le film 510 doit présenter des dimensions suffisamment importantes pour permettre d'entourer le bloc de mousse avec toute la bordure du film qui dépasse du lien afin de garantir l'étanchéité du dispositif de présentation 500.

Comme pour le fourreau 410 ou 410' du dispositif de présentation 400, le film 510 du dispositif de présentation 500 peut présenter, dans sa partie centrale destinée à recouvrir le bloc de mousse 150, des impressions 511 qui rendent opaque l'emballage extérieur formé du film 510, de sorte que la partie basse du bouquet 300 et le bloc de mousse 150 ne sont pas visibles à travers le film 510.

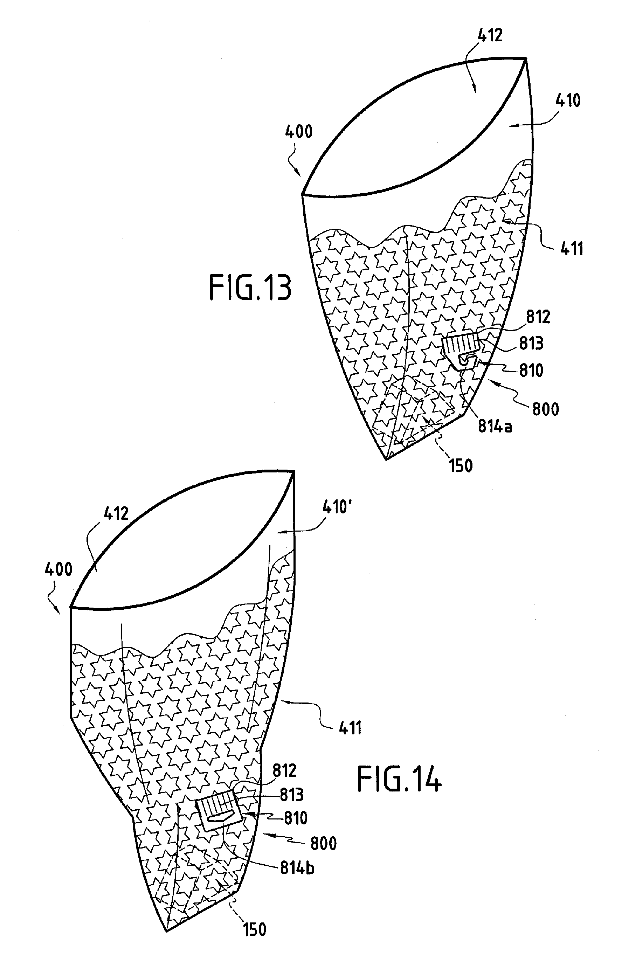

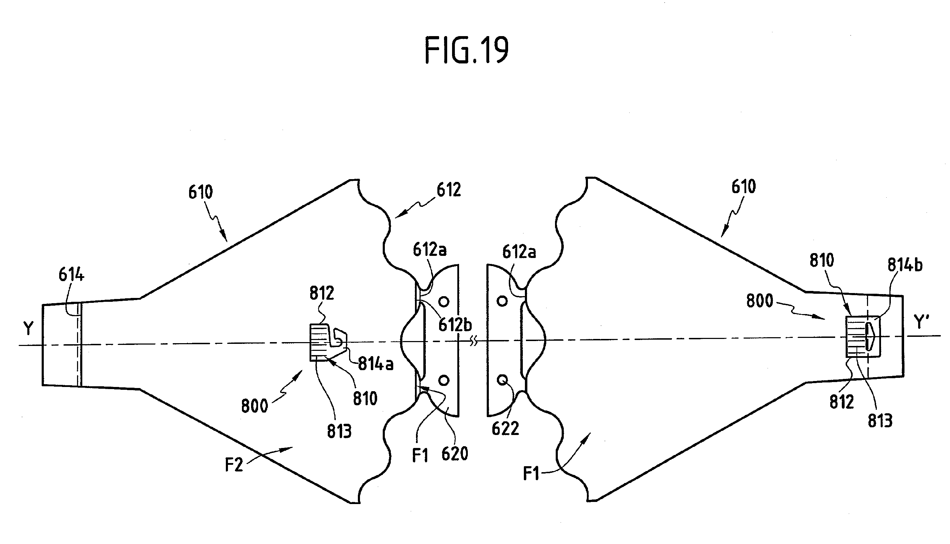

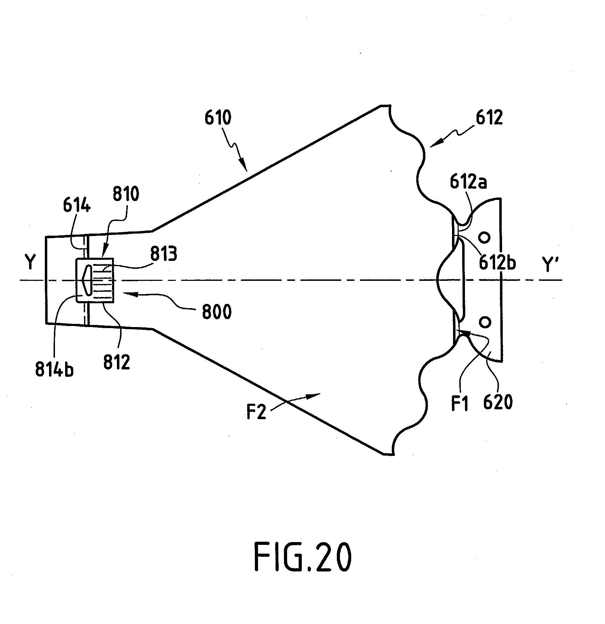

On décrit ci-après, en relation avec les figures 13 à 20 des variantes des première, deuxième et troisième formes de réalisation des dispositifs de présentation 400 et 500 de bouquets de fleurs coupées, ainsi (figures 19 et 20) qu'un fourreau destiné à former une quatrième forme de réalisation de dispositif de présentation.

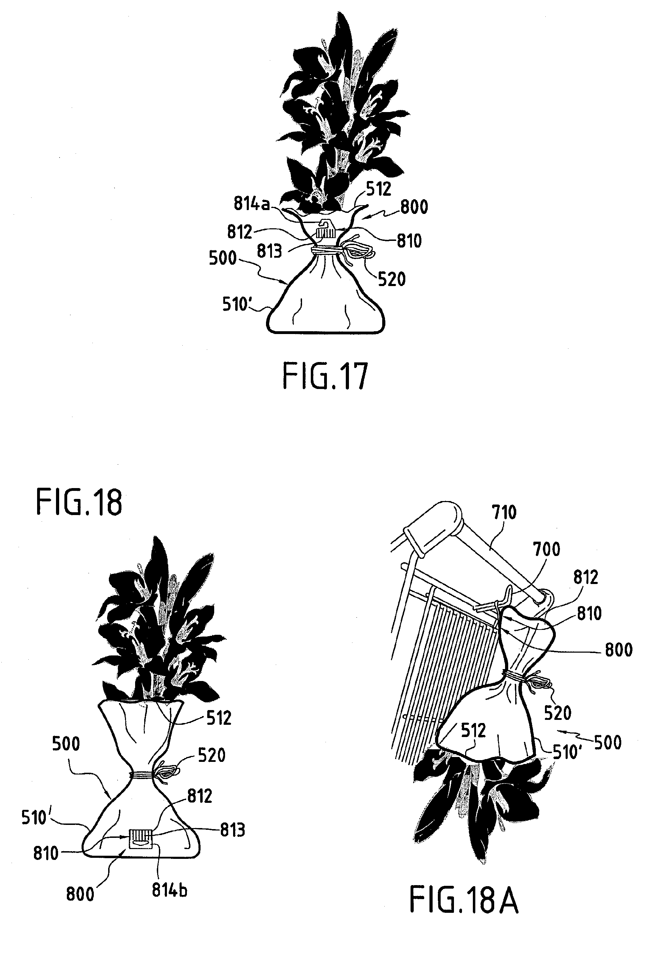

Dans ces dispositifs de présentation des figures 13 à 20, on prévoit l'ajout de moyens de suspension 800 sur la face extérieure de l'une des deux feuilles de la partie de housse de chaque fourreau 410, 410' ou 610 (figures 13 à 16, 19 et 20) ou sur la face extérieure du film d'emballage 510 qui forme également, une fois replié, un fourreau 510' (figures 17, 18 et 18A).

Ces moyens de suspension 800 sont destinés à permettre l'accrochage et/ou la fixation du fourreau 410, 410', 510'ou 610, vide ou rempli d'une composition ou d'un bouquet, sur un support de suspension tel qu'une tige de présentation située sur une gondole de magasin, tel que le rebord d'un chariot de supermarché ou caddie (nom déposé), ou encore tel que la tige horizontale, en forme de U fermé, disposée du côté et sous la barre de conduite d'un caddie et destinée à recevoir les crochets de cintres.

Conformément aux figures 13 à 20, on utilise, à titre de moyens de suspension 800, des éléments adhésifs avec crochet 810 formés par découpe dans une feuille réalisée dans un matériau rigide, par exemple en matière plastique. Ces éléments adhésifs avec crochet 810 comportent une partie de fixation autocollante 812 recouverte, avant positionnement et fixation, d'une feuille pelable et qui vient se fixer par collage sur la face extérieure du fourreau 410, 410', 510' ou 610.

Cette étape de fixation est intégrée à la ligne de fabrication, de préférence de manière automatisée et/ou mécanique selon plusieurs possibilités. On peut, en effet, prévoir que les moyens de suspension 100 équipent au préalable l'une des bobines respectivement munies d'une première bande de film et d'une deuxième bande de film qui vont former les deux feuilles des fourreaux 410, 410' ou 610. On peut également prévoir de placer les moyens de suspension 100 sur la deuxième bande de film (ou sur la première bande de film) avant, pendant ou après une étape de découpe et de thermosoudage.

Ces éléments adhésifs avec crochet 810 comportent également une partie formant crochet 814a ou 814b destinée à s'accrocher sur un support.

Ces deux variantes de réalisation des moyens de suspension 800 vont maintenant être décrits.

Sur les figures 13, 16, 17 et sur la partie gauche de la figure 19, la partie formant crochet 814a est ouverte, à l'identique d'un crochet de cintre, ce qui permet l'accrochage du fourreau sur une tige ou sur tout rebord.

Sur les figures 14, 15, 18, sur la partie droite de la figure 19 et sur la figure 20, la partie formant crochet 814b est fermée en formant une boucle destinée à s'enficher sur l'extrémité d'une tige de support.

Il faut noter que du fait du montage de la partie de fixation autocollante 812 des éléments adhésifs avec crochet 810, sur une matière plastique thermosoudable formant les parois des fourreaux 410, 410,' 510' et 610, en particulier le film 510 , il est possible de retirer manuellement à tout moment les moyens de suspension 800 si nécessaire.

En effet, par exemple lors de l'achat d'un produit, tel qu'un bouquet, contenu dans le fourreau suspendu sur la tige d'une gondole par les moyens de suspension 800, l'acheteur va retirer le fourreau 410, 410,' 510' ou 610 contenant le bouquet de la tige de gondole puis l'accrocher à son caddie, passer en caisse et enfin retirer, en le décollant, ce crochet 810 avant d'offrir le bouquet emballé dans le fourreau 410, 410' ou 510'. Une fois que l'élément adhésif avec crochet 810 est retiré, on obtient en conséquence un fourreau d'une qualité esthétique supérieure.

Sur les figures 13, 16, 17 et sur la partie gauche de la figure 19 sont représentés, à titre d'exemple, les moyens de suspension 800 de la variante des éléments adhésifs avec crochet 810 avec la partie formant crochet 814a qui est ouverte, respectivement pour un fourreau 410 déployé issu de deux feuilles et ayant une forme générale de U, pour un fourreau 410' déployé issu de deux feuilles et présentant une forme générale de "Y", pour un fourreau 510' formé d'un film 510 replié et pour un fourreau ouvert 610 non déployé.

Il est entendu que l'une ou l'autre des deux variantes des moyens de suspension 800 pourrait être utilisée. Ainsi, sur les figures 14, 15, 18, sur la partie droite de la figure 19 et sur la figure 20, sont représentés les moyens de suspension 800 de la variante des éléments adhésifs avec crochet 810 avec la partie formant crochet 814b qui est fermée, respectivement pour un fourreau 410' déployé issu de deux feuilles et présentant une forme générale de "Y", pour un fourreau 410 déployé issu de deux feuilles et ayant une forme générale de U, pour un fourreau 510' formé d'un film 510 replié et pour deux fourreaux ouverts 610 non déployés.

Les fourreaux 610 des figures 19 (à droite et à gauche) et 20 sont montrés non déployés dans leur état de partie de housse. Ces fourreaux 610 sont issus de deux feuilles F1 et F2 présentant une forme générale de "Y", dont la partie la plus large (extrémité des branches du Y), appelée, partie haute, délimite une ouverture 612 pour le passage d'un bouquet. Cette ouverture 612 est située entre le bord ondulé 612a de la feuille F1 et le bord ondulé 612b de la feuille F2.

Sur la partie de gauche de la figure 19, c'est la feuille F2 qui est apparente, la feuille F1 étant derrière, tandis que sur le partie droite de la figure 19, c'est la feuille F1 qui est apparente, la feuille F2 étant derrière. En fait, sur la figure 19, les fourreaux 610 sont représentés alors qu'ils sont encore accrochés à leur partie de souche 620 issue de la seule feuille F1 et qui se détache du fourreau selon une ligne de pré-découpe (ou découpe pointillée) superposée avec le bord 612a. Cette partie de souche 620 présente des trous 622 qui peuvent servir à l'accrochage des liasses de fourreaux sur des moyens (tiges) d'accrochage ou de retenue appropriés, en vue de l'utilisation des liasses, les parties de souche devant être correctement retenues pour permettre "l'arrachage" des parties de housse destinées à former les fourreaux 610.

Contrairement aux fourreaux 410, 410' et 510', le fourreau 610 n'est pas fermé dans sa partie la moins large (ici la base du pied du Y) appelée partie basse qui délimite un passage 614 entre les feuilles F1 et F2, le long du bord libre de la feuille F2 qui est plus courte que la feuille F en partie basse. Ce passage 614 est toutefois suffisamment étroit pour empêcher la sortie d'un bloc de mousse 110, 120, 130, 140, 150 conforme à la présente invention et qui est introduit dans le fourreau 610 par l'ouverture 612, préalablement au bouquet.

En plus, la feuille F2 est plus courte que la feuille F1, dans la partie basse.

Deux positions préférentielles sont adoptées pour placer l'élément adhésif avec crochet 810 formant les moyens de suspension 800.

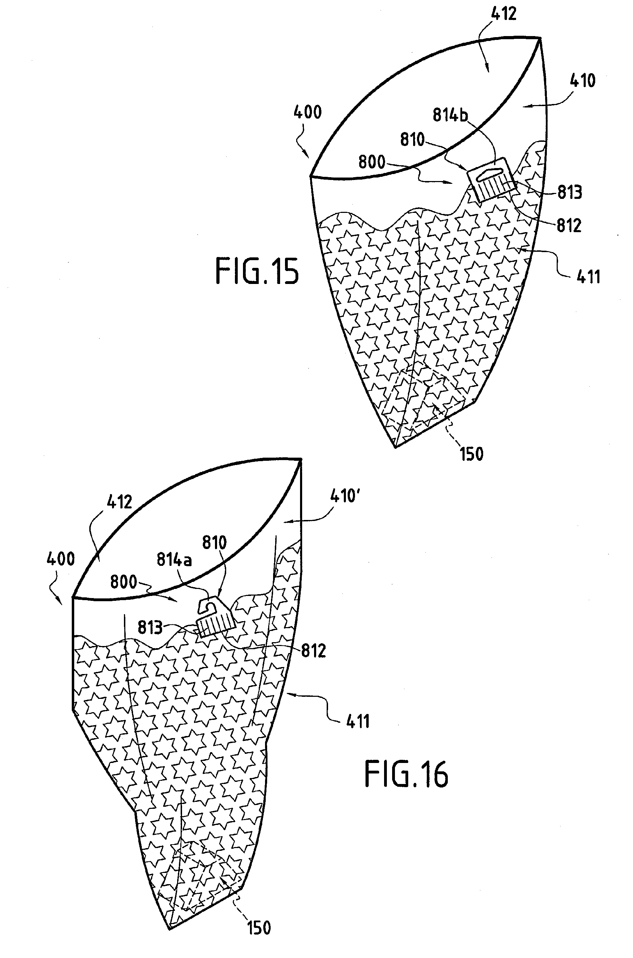

Selon une première position visible sur les figures 15, 16, 17 et la partie gauche de la figure 19, l'élément adhésif avec crochet 810 est placé dans la partie haute du fourreau 410, 410', 510', 610 de manière relativement peu éloignée de l'ouverture 412, 512, 612, la partie formant crochet 814a ou 814b étant tournée vers l'ouverture 412, 512, 612. Cette première position permet d'accrocher le fourreau avec le bouquet qui est placé à l'endroit, tiges en bas et fleurs en haut.

Selon une deuxième position visible sur les figures 13, 14, 18, la partie droite de la figure 19 et la figure 20, l'élément adhésif avec crochet 810 est placé dans la partie basse du fourreau 410, 410', 510', 610 et sensiblement en regard ou au dessus de la position du bloc de mousse 150, près du fond du fourreau, la partie formant crochet 814a ou 814b étant tournée en direction opposée de l'ouverture 412, 512, 612.

Dans le cas du fourreau d'emballage 410 présentant une forme générale de U légèrement évasée vers le haut (figure 13), dans le cas du fourreau 410' qui présente une forme générale de "Y" (figure 14), ou dans le cas du fourreau 510' (figure 18) issu d'un film 510 replié, l'élément adhésif avec crochet 810 est placé, dans cette deuxième position, sensiblement en regard du bloc de mousse 150 à un endroit qui permet de resserrer le fourreau avec un lien (une fois le bouquet placé dans le fourreau) tout en ayant l'élément adhésif avec crochet 810 situé sous le lien.

Dans le cas du fourreau 610 ouvert en partie basse, comme on peut le voir dans la partie droite de la figure 19, l'élément adhésif avec crochet 810 est placé, dans cette deuxième position, sur la face extérieure de la feuille F1 la plus longue, au moins la partie de fixation 812 de l'élément adhésif avec crochet 810 étant disposée à un endroit de la partie basse du fourreau 610 qui comporte les deux feuilles F1 et F2 superposées.

Selon la variante de la figure 20 en relation avec un fourreau 610 ouvert en partie basse, l'élément adhésif avec crochet 810 est montré placé, dans cette deuxième position, sur la face externe de la feuille F2 qui est la plus courte en partie basse. Plus précisément, de préférence, comme illustré sur cette figure 20, c'est seulement la partie de fixation 812 de l'élément adhésif avec crochet 810 qui est montée sur la feuille F2, à proximité de son bord libre qui délimite le passage 614. De cette manière, la partie formant crochet 814b (qui est illustrée ici fermée mais qui peut être ouverte selon la forme 814a) dépasse du bord libre de la partie basse de la feuille F2, ce qui rend la partie formant crochet 814b plus accessible, surtout quand le fourreau 610 est rempli par le bloc de mousse et un bouquet.

Cette deuxième position permet d'accrocher le fourreau avec le bouquet qui est placé à l'envers, tiges en haut et fleurs en bas comme on le voit sur les figures 18 et 18A en relation avec un fourreau 510' issu d'un film 510 replié mais on aurait le même résultat avec le fourreau 410 de la figure 13, le fourreau 410' de la figure 14, le fourreau 610 de la partie droite de la figure 19 ou le fourreau 610 de la figure 20.

Sur la figure 18A, est plus particulièrement visible le fourreau 510' avec un élément adhésif avec crochet 810 dont la partie formant crochet 814b (fermée en l'espèce) est montée autour de la tige horizontale 700 d'un chariot de supermarché, cette tige 700 étant en forme de U fermé et située du côté et sous la barre de conduite 710.

Selon une autre disposition avantageuse, il est prévu que l'élément adhésif avec crochet 810 présente une partie de fixation 812 également équipée, outre de l'adhésif qui la rend autocollante après retrait de la feuille pelable, d'un ou de plusieurs signes distinctifs 813 obtenus par marquage et/ou impression, en particulier un code-barres.

Ce ou ces signes distinctifs peuvent comprendre une mention en relation avec l'occasion d'offrir le bouquet qui va être logé dans le fourreau 410, 410', 510', 610 (« plaisir d'offrir »...) ou encore un logo, un dessin représentant le mode d'emploi pour accrocher le fourreau à la tige horizontale 700, ou un code-barres 813 tel qu'il apparaît sur les figures 13 à 20. Un tel code-barres 813 permet l'identification du bouquet, y compris son prix par lecture optique, notamment lors du passage à la caisse.

Selon une première solution, ce ou ces signes distinctifs peuvent être disposés sur la même face de la partie de fixation 812 que l'adhésif, sous ce dernier.

Selon une seconde solution préférentielle, la partie de fixation 812 présente l'adhésif sur une première face et le ce ou ces signes distinctifs 813 sont appliqués sur une deuxième face de la partie de fixation 812, par impression ou tout autre moyen de marquage.

En particulier, selon la première ou la seconde solutions précitées, on applique sur la face concernée de la partie de fixation 812 une sous-couche blanche sur laquelle on réalise une impression par transfert thermique.

On rappelle que dans le cas de l'utilisation de l'un des éléments adhésifs avec crochet 810 représentés sur les figures 13 à 20, outre l'avantage de permettre de suspendre le fourreau 410, 410', 510 ou 610, l'élément 810 peut être retiré en le décollant de la face extérieure de la feuille qui le porte, afin de fournir un aspect esthétiquement plus acceptable pour un emballage de bouquet éventuellement destiné à être offert.

## Revendications

1. Procédé de fabrication de blocs de mousse (150₁, 150₂ et 150₃), **caractérisé en ce qu'**il comporte les étapes suivantes :
a) fournir un bloc de base (170) en mousse rigide présentant une forme allongée selon une direction longitudinale (X,X') perpendiculaire à un plan transversal, ledit bloc de base (170) comportant une face inférieure (172) pourvue d'au moins trois points définissant un plan d'appui apte à venir en contact sur une surface plane de support, une face supérieure (174) opposée à ladite face inférieure (172) et pourvue d'au moins trois points définissant un plan d'appui apte à venir en contact sur une surface plane, deux faces latérales (179), une face avant (176) et une face arrière (178) reliant chacune la face inférieure (172) à la face supérieure (174) et aux deux faces latérales (179), lesdites face inférieure (172), face supérieure (174) et faces latérales (179) étant orientées selon ladite direction longitudinale (X,X');
b) découper ledit bloc de base (170) selon au moins une surface de coupe d'un premier type (210, 212), présentant une direction inclinée par rapport au plan transversal et formant une intersection avec lesdites faces latérales (179), ladite face inférieure (172), et ladite face supérieure (174) du bloc de base (170), afin de séparer ledit bloc de base (170) en au moins un bloc d'un premier type (150₁, 150₃) comportant toute la face arrière (178) et un tronçon restant du bloc de base (170') comportant toute la face avant (176), la surface de coupe du premier type (210, 212) formant un premier angle (α) avec la portion du plan d'appui de la face inférieure (172) qui est adjacente au bloc du premier type (150₁, 150₃) ; et
c) séparer ledit tronçon restant du bloc de base (170') dudit bloc du premier type (150₁, 150₃).

2. Procédé de fabrication selon la revendication 1, **caractérisé en ce qu'**il comporte en outre les étapes suivantes :
d) découper ledit tronçon restant du bloc de base (170') selon au moins une surface de coupe d'un deuxième type (220, 222), présentant une direction inclinée par rapport au plan transversal et formant une intersection avec lesdites faces latérales (179), ladite face inférieure (172), et ladite face supérieure (174) du tronçon restant du bloc de base (170), afin de séparer ledit tronçon restant du bloc de base (170') en au moins un bloc d'un deuxième type (1502) et un autre tronçon restant du bloc de base (170") comportant la face avant (176), la surface de coupe du deuxième type (220, 222) formant un deuxième angle (y) avec la portion du plan d'appui de la face inférieure (172) qui est adjacente au bloc du deuxième type (150₂), ledit deuxième angle (y) étant tel que la somme des premier et deuxième angles (α, y) est sensiblement égale à 180°; et
e) retourner à l'étape b) en remplaçant le bloc de base (170) par ledit autre tronçon restant du bloc de base (170") et la face arrière (178) par la face dudit autre tronçon restant du bloc de base (170") opposée à ladite face avant (176).

3. Procédé de fabrication selon la revendication 1, **caractérisé en ce que** lesdites faces latérales (179) sont planes, parallèles entre elles et perpendiculaires audit plan d'appui de la face inférieure (172).

4. Procédé de fabrication selon la revendication 1, **caractérisé en ce que** ledit plan d'appui de la face inférieure (172) est sensiblement parallèle audit plan d'appui de la face supérieure (174).

5. Procédé de fabrication selon la revendication 3, **caractérisé en ce que** ladite face inférieure (172) et ladite face supérieure (174) sont sensiblement planes et parallèles entre elles.

6. Procédé de fabrication selon l'une quelconque des revendications précédentes, **caractérisé en ce que** lesdites surfaces de coupe du premier type (210, 212) et du deuxième type (220, 222) sont des plans formant respectivement un plan incliné du premier type et un plan incliné du deuxième type

7. Procédé de fabrication selon les revendications 5 et 6, **caractérisé en ce que** ledit plan incliné du premier type (210, 212) forme ledit premier angle (α) avec la portion de la face inférieure (172) appartenant au bloc du premier type (150₁, 150₃).

8. Procédé de fabrication selon l'une quelconque des revendications 2 à 7, **caractérisé en ce que** ladite face inférieure (172), ladite face supérieure (174), lesdites faces latérales (179), ladite face avant (176) et ladite face arrière (178) du bloc de base (170) sont des polygones à quatre côtés.

9. Procédé de fabrication selon la revendication 7, **caractérisé en ce que** ladite face inférieure (172), ladite face supérieure (174), ladite face avant (176) et ladite face arrière (178) du bloc de base (170) sont des rectangles.

10. Procédé de fabrication selon l'une quelconque des revendications précédentes, **caractérisé en ce que** l'un parmi ledit premier angle (α) et ledit deuxième angle (γ) est compris entre 30 et 75°, et est de préférence égal à 30, 45, 50, 60 ou 75° et **en ce que** l'autre parmi ledit premier angle (α) et ledit deuxième angle (γ) est compris entre 120 et 165°, et est de préférence égal à 120, 135, 140, 150 ou 165°.

11. Procédé de fabrication selon l'une quelconque des revendications précédentes, **caractérisé en ce que** ladite face avant (176) et ladite face arrière (178) du bloc de base (170) sont symétriques par rapport audit plan transversal.

12. Procédé de fabrication selon l'une quelconque des revendications précédentes, **caractérisé en ce que** ladite face avant (176) et ladite face arrière (178) du bloc de base (170) sont inclinées de 30 , 45, 50, 60, 75, 120, 135, 140, 150 ou 165° par rapport au plan d'appui de la surface inférieure (172).

13. Procédé de fabrication selon la revendication 9, **caractérisé en ce que** ledit bloc de base (170) en mousse rigide présente une forme de parallélépipède rectangle.

14. Procédé de fabrication selon l'une quelconque des revendications précédentes, **caractérisé en ce que** pendant ladite étape a), ledit bloc de base (170) est réalisé par moulage.

15. Bloc de mousse synthétique (110, 120, 130 ,140, 150) en particulier en polyuréthane à cellules fermées, notamment pour le support et la présentation de bouquets de fleurs coupées, **caractérisé en ce qu'**il présente une forme allongée selon une direction longitudinale (X,X') perpendiculaire à un plan transversal et **en ce qu'**il comporte :
- une face de fond (112, 122, 132 ,142, 152) délimitée par une figure à quatre côtés comportant au moins trois points définissant un plan d'appui apte à venir en contact sur une surface plane de support, au moins deux côtés non consécutifs desdits côtés formant, en projection sur ledit plan d'appui de la face de fond, des segments rectilignes parallèles entre eux,
- deux faces latérales (119, 129, 139 ,149, 159) parallèles entre elles et perpendiculaires audit plan d'appui de la face de fond, lesdites faces latérales (119, 129, 139 ,149, 159) étant délimitées par une figure à quatre côtés, et
- une face de tête (114, 124, 134 ,144, 154) opposée à ladite face de fond (112, 122, 132 ,142, 152) et délimitée par une figure à quatre côtés parmi lesquels au moins deux côtés non consécutifs adjacents auxdites faces latérales (119, 129, 139 ,149, 159) forment, en projection sur ledit plan d'appui de la face de fond, des segments rectilignes parallèles entre eux,
- une face avant (116, 126, 136 ,146, 156) et une face arrière (118, 128, 138, 148, 158) reliant chacune la face de fond à la face de tête et aux deux faces latérales, ladite face avant (116, 126, 136 ,146, 156) et ladite face arrière (118, 128, 138, 148, 158) étant chacune délimitée par une figure à quatre côtés, ladite face avant (116, 126, 136 ,146, 156) et ladite face arrière (118, 128, 138, 148, 158) formant respectivement, avec la portion dudit plan d'appui de la face de fond, qui est adjacente à ladite face de fond, un angle avant aigu (α) et un angle arrière (β) aigu,
lesdites face de fond (112, 122, 132 ,142, 152), ladite face de tête et lesdites faces latérales (119, 129, 139 ,149, 159) étant orientées selon ladite direction longitudinale (X,X').

16. Bloc de mousse selon la revendication 15, **caractérisé en ce que** lesdites face avant (116, 126, 136 ,146, 156) et face arrière (118, 128, 138, 148, 158) sont délimitées par des figures planes et **en ce que** chacune desdites faces avant et arrière comporte au moins deux côtés non consécutifs, adjacents auxdites faces latérales (119, 129, 139 ,149, 159), qui sont rectilignes et parallèles entre eux.

17. Bloc de mousse selon la revendication 15 ou 16, **caractérisé en ce que** ladite face de fond (112, 122, 132 ,142, 152) forme, en projection sur ledit plan d'appui, un rectangle dont les côtés de plus grande longueur s'étendent selon ladite direction longitudinale (X,X') perpendiculaire audit plan transversal.

18. Bloc de mousse selon l'une quelconque des revendications 15 à 17, **caractérisé en ce que** lesdites faces latérales (119, 129, 139 ,149, 159) forment un polygone à quatre côtés.

19. Bloc de mousse selon l'une quelconque des revendications 15 à 18, **caractérisé en ce que** lesdites faces latérales (119, 129, 139 ,149, 159), la projection de ladite face de tête (114, 124, 134 ,144, 154) sur son plan d'appui correspondant et la projection de ladite face de fond (112, 122, 132 ,142, 152) sur son plan d'appui correspondant présentent une forme de trapèze.

20. Bloc de mousse selon l'une quelconque des revendications 15 à 19, **caractérisé en ce que** ladite face de fond (112, 122, 132 ,142, 152) et ladite face de tête (114, 124, 134 ,144, 154) sont planes.

21. Bloc de mousse selon l'une quelconque des revendications 15 à 20, **caractérisé en ce que** lesdits angle avant aigu (α) et angle arrière aigu (β) sont compris entre 30 et 75°, de préférence appartenant au groupe comprenant les valeurs de 30, 45, 50, 60 et 75°.

22. Bloc de mousse selon l'une quelconque des revendications 15 à 21, **caractérisé en ce que** la valeur du angle avant aigu (α) formé entre ladite face avant (116, 126, 136 ,146, 156) et ledit plan d'appui de la face de fond (112, 122, 132, 142, 152) est égale à la valeur du angle arrière aigu (β) formé entre ladite face arrière (118, 128, 138, 148, 158) et ledit plan d'appui de la face de fond.

23. Bloc de mousse selon l'une quelconque des revendications 15 à 22, **caractérisé en ce que** ledit plan transversal forme un plan de symétrie.

24. Bloc de mousse selon l'une quelconque des revendications 15 à 23, **caractérisé en ce que**, selon la direction longitudinale (X,X'), la longueur de la face de fond (112, 122, 132 ,142, 152) est comprise entre 2 et 8 fois la longueur de la face de tête (114, 124, 134, 144, 154).

25. Bloc de mousse selon l'une quelconque des revendications 15 à 24, **caractérisé en ce que** la longueur de la face de fond (112, 122, 132 ,142, 152) selon la direction longitudinale (X,X') est comprise entre 1 et 4 fois la hauteur du bloc de mousse mesurée selon une direction perpendiculaire au plan d'appui de la face de fond (112, 122, 132 ,142, 152).

26. Dispositif de présentation (400) d'une composition formée d'un ou plusieurs éléments de décoration, en particulier des bouquets de fleurs coupées (300), **caractérisé en ce qu'**il comporte un bloc de mousse (110, 120, 130 ,140, 150) selon l'une quelconque des revendications 15 à 25 et un fourreau d'emballage (410, 410', 610) comprenant une première feuille et une deuxième feuille, réalisées à partir de deux films superposés et découpés, et dont les bords sont soudés de manière étanche au moins à l'exception de l'emplacement d'une ouverture (412) permettant l'entrée de ladite composition, ledit bloc de mousse (110, 120, 130 ,140, 150) étant logé dans ledit fourreau.

27. Dispositif de présentation (500) d'une composition formée d'un ou plusieurs éléments de décoration, en particulier des bouquets de fleurs coupées (300), **caractérisé en ce qu'**il comporte un bloc de mousse (110, 120, 130 ,140, 150) selon l'une quelconque des revendications 15 à 25 et un film d'emballage (510) étanche refermé autour dudit bloc de mousse par un lien (520) de façon à former un fourreau d'emballage (510') avec une ouverture (512) pour ladite composition ou ledit bouquet (300)

28. Dispositif de présentation (400 ; 500) selon la revendication 26 ou 27, **caractérisé en ce qu'**il comprend en outre des moyens de suspension (800) monté sur la face externe dudit fourreau d'emballage (410, 410', 610 ; 510').

29. Dispositif de présentation (400 ) selon les revendications 27 et 28, **caractérisé en ce que** lesdits moyens de suspension (800) sont disposés sur l'une ou l'autre parmi la première et la deuxième feuille dudit fourreau d'emballage (410, 410'), soit dans une zone distante de ladite ouverture (412), soit dans une zone adjacente à ladite ouverture (412).

30. Dispositif de présentation (400 ; 500) selon la revendication 28, **caractérisé en ce que** lesdits moyens de suspension (800) comportent une partie de fixation (812) autocollante amovible, destinée au montage desdits moyens de suspension (800) sur ledit fourreau d'emballage (410, 410', 610 ; 510'), et une partie formant crochet (814a ;814b) destinée à la suspension dudit fourreau d'emballage (410, 410', 610 ;510').

31. Dispositif de présentation (400 ; 500) selon la revendication 30, **caractérisé en ce que** ladite partie de fixation (812) présente une première face recouverte d'adhésif et une deuxième face recouverte d'un ou de plusieurs signes distinctifs (813) obtenus par marquage et/ou impression, en particulier un code-barres.
